# FASCICULE DE BREVET EUROPEEN

(11) **EP 0 754 096 B1**
(45) Date de publication et mention de la délivrance du brevet: **21.10.1998**
(21) Numéro de dépôt: 95914251.4
(22) Date de dépôt: 30.03.1995
(51) Int. Cl.: B07C 5/36, B65F 1/00

(54) **PROCEDE ET DISPOSITIF DE RECOLTE SELECTIVE D'OBJETS EN VERRE ET DE STOCKAGE TEMPORAIRE DE LEUR MATIERE**
VERFAHREN UND VORRICHTUNG ZUR SELEKTIVEN SAMMLUNG VON GEGENSTÄNDEN AUS GLAS UND ZUM ZEITWEILIGEN LAGERN IHRES STOFFES
METHOD AND DEVICE FOR SELECTIVELY COLLECTING GLASS OBJECTS AND TEMPORARILY STORING THE MATERIAL THEREOF

(30) Priorité: 01.04.1994 BE 9400348
(43) Date de publication de la demande: 22.01.1997
(73) Titulaire: GIANASSO, Roland, 1030 Bruxelles (BE)
(72) Inventeur: GIANASSO, Roland, 1030 Bruxelles (BE)
(74) Mandataire: Claeys, Pierre
(86) Numéro de dépôt international: BE9500029
(87) Numéro de publication internationale: WO9526835

(56) Documents cités:
- EP-A- 0 211 139
- EP-A- 0 334 987
- WO-A-92/01272
- DE-U- 8 806 095
- DE-U- 9 315 201
- FR-A- 2 332 518

## Description

La présente invention concerne un procédé et un dispositif de récolte sélective d'objets en verre et de stockage temporaire de leur matière, notamment d'objets creux comme des bouteilles, des bocaux, etc... selon le préambule des revendications 1 et 8 (voir EP-A-0334987).

A ce jour, la récolte d'objets creux en verre, du genre bouteilles, flacons, bocaux, etc... qui ne sont pas repris comme tels dans les circuits de distribution (parce que par exemple non consignés) peuvent être déposés dans des réservoirs de stockage temporaire dans lesquels, la plupart du temps, des objets de verre de couleurs différentes ou des objets étrangers sont mélangés à ceux pour lesquels les récipients de stockage sont prévu. Cela se vérifie également dans le cas de récipients à plusieurs compartiments pour soi-disant permettre de stocker séparément des objets en verre selon leur couleur. Il est manifeste que pour obtenir un recyclage rentable du verre, il est indispensable de ne pas contaminer du verre dit "blanc" avec du verre de couleur ou avec d'autres objets colorants ou étrangers. Dans ce cas, un tri très sévère doit être réalisé de façon indispensable pour le verre blanc reçu dans un récipient ad hoc, pour que le contenu de ce dernier puisse être négocié au prix fort du verre blanc. Pour qu'un tel tri soit fiable, il nécessite une activité onéreuse.

Il peut être bien sûr utile aussi de séparer le verre brun du verre vert mais ici l'impact du prix de négociation peut ne pas être aussi considérable s'il n'y a qu'une faible contamination du verre vert et même peut être considéré comme insignifiant si du verre vert est mélangé dans un réservoir de verre brun.

Le mode de récolte décrit ci-dessus a de plus le désavantage que les objets en verre creux ne tombant pas de très haut, surtout à mesure que le récipient se remplit, conservent pratiquement leur volume entier pendant ce stockage. Cela entraîne donc par récipient un poids de verre stocké assez faible pour un volume d'encombrement assez grand. De plus, dans les récipients usuels, le bruit de chute et éventuellement de casse est élevé.

Enfin il est fréquent que les récipients susdits ne sont pas remplis de façon régulière dans le temps et qu'à certaines époques ils débordent largement avant d'être vidés par le service de collecte ad hoc, alors qu'à d'autres moments ce même service se déplace pour vider un récipient trop peu rempli.

La présente invention a pour but de remédier aux inconvénients ci-dessus et de procurer un procédé qui permet de réaliser à un faible coût et avec une grande sécurité un tri par exemple des objets creux en verre blanc par rapport à tout autre objet contaminant, même s'il est également en verre creux, et ensuite de réaliser une réduction importante du volume de stockage de la matière dudit objet creux en verre blanc jusqu'à environ 75 % par rapport à son volume d'objet. De préférence, la présente invention a aussi pour but de contrôler le niveau de ladite matière stockée afin de pouvoir émettre un signal avertissant que le récipient concerné approche d'une valeur maximale de stockage, bien avant qu'il y ait débordement du stockage.

A cet effet, suivant l'invention, ledit procédé est caractérisé en ce que, pour la fragmentation, l'objet est supporté et est soumis à une action de pressage et/ou de percussion et/ou d'écrasement appliquée sur deux côtés longitudinaux opposés de l'objet selon une direction perpendiculaire à son axe longitudinal, et en ce que, si des fragments obtenus sont trop encombrants, cette action est répétée.

Suivant un mode de réalisation de l'invention, le procédé comprend, soit pour ladite sélection d'un paramètre, soit en plus de cette étape, une sélection d'au moins une couleur à laquelle doit satisfaire l'objet en verre présenté.

Suivant un mode préféré de réalisation de l'invention, le procédé comporte en outre:
- une surveillance de niveau de stockage temporaire des fragments de verre,
- lorsque le niveau a atteint une valeur déterminée, une émission d'un signal d'avertissement correspondant, et,
- sur réception du signal d'avertissement, un transfert sélectif des fragments de verre stockés temporairement, en vue de leur recyclage, de préférence le transfert comprenant une aspiration des fragments et, le cas échéant, un brassage de ceux-ci.

Suivant l'invention, ledit dispositif est caractérisé en ce que les moyens de fragmentation comportent:
- un fond pour supporter l'objet,
- une plaque de butée et une plaque de fragmentation disposées en opposition de part et d'autre de l'objet à fragmenter sensiblement parallèlement à son axe longitudinal,
- un organe moteur agencé pour communiquer à la plaque de fragmentation un mouvement de va-et-vient sensiblement perpendiculaire à l'axe longitudinal de l'objet à fragmenter depuis une position de repos et de réception de l'objet à fragmenter jusqu'à une position de fragmentation pour casser cet objet en fragments par une action de pressage et/ou de percussion et/ou d'écrasement entre les plaques de butée et de fragmentation,
- le fond étant agencé pour laisser s'échapper les fragments de l'objet des moyens de fragmentation,
- les moyens de fragmentation étant agencés pour que l'organe moteur puisse répéter le mouvement de va-et-vient de la plaque de fragmentation s'il est détecté que les fragments sont trop encombrants.

D'autres détails et particularités de l'invention ressortiront des revendications secondaires et de la description des dessins qui sont annexés au présent mémoire et qui illustrent, à titre d'exemples non limitatifs, le procédé et des formes de réalisation avantageuses du dispositif suivant l'invention.

La figure 1 est une vue schématique en élévation qui illustre le procédé susdit et une forme de réalisation d'un dispositif pour le stockage de la matière d'objets en verre d'une couleur choisie.

La figure 2 est une vue schématique en élévation de moyens de transport utilisables dans une autre forme de réalisation de dispositif de l'invention, mettant en oeuvre le procédé de l'invention.

La figure 3 est une vue schématique en élévation, prise perpendiculairement à la précédente; montrant qu'outre les moyens de transport ci-dessus, il est prévu un agencement de mise en oeuvre de deux stockages distincts de matières d'objets en verre de couleurs différentes et moyens de fragmentation distincts correspondants.

La figure 4 est une vue schématique en plan, avec brisure partielle, prise du dessus, du dispositif selon les figures 2 et 3.

Dans les différentes figures, les mêmes notations de référence désignent des éléments identiques ou analogues, une lettre ajoutée à ces notations pouvant désigner un même élément dans une autre position ou dans une autre configuration,....

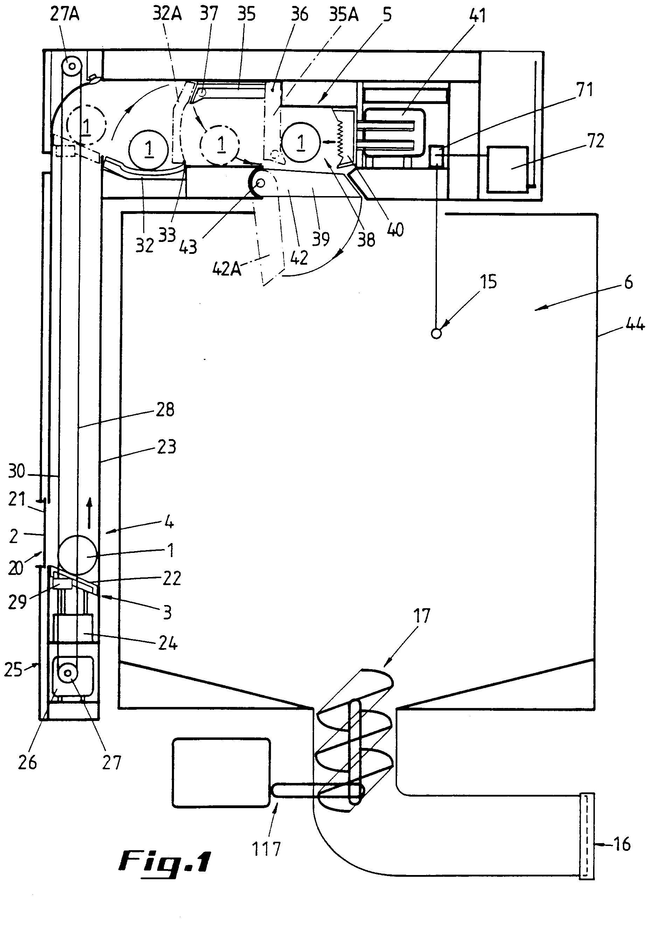

Le procédé suivant l'invention, qui est destiné à la récolte sélective par exemple de bouteilles et bocaux en verre et au stockage temporaire de leur matière et qui est décrit ci-après à titre d'exemple non exhaustif, peut comprendre (figure 1), outre une introduction d'un objet 1, par exemple d'une bouteille 1 (vue par son fond) à travers un orifice 2 qui peut être calibré en fonction de dimensions et/ou formes d'objets admis dans le procédé et qui peut être considéré comme un type de contrôle. De plus le procédé peut comprendre un contrôle, en 3, par exemple par pesée de l'objet introduit, pour n'admettre alors que des objets d'un poids compris par exemple entre 50 et 570 grammes dans le procédé. Une telle sélection de poids peut permetttre de discerner entre autres un objet creux en matière plastique, ou un objet rempli,...L'objet introduit peut aussi être soumis à un autre type de contrôle en 4, par exemple à l'aide d'un système de cellule photoélectrique connu en soi, pour déterminer que la couleur du verre de l'objet 1 est bien celle que l'on accepte de stocker dans le cas d'espèce.

Si la bouteille 1 satisfait à l'un de ces contrôles ou à une combinaison choisie de ceux-ci, elle peut être amenée jusqu'en 5 où elle est fragmentée, par exemple par écrasement, par percussion, par broyage, et, après cette opération, les fragments peuvent être évacués pour être stockés en 6.

Dans le procédé décrit au moyen de la figure 1, si l'objet 1 ne satisfait pas, selon le cas, à l'un des paramètres de différentiation (poids, couleur, dimensions, forme,...) susdits entre un objet 1 admis et un objet non admis dans le procédé, le procédé est suspendu et, par exemple, la bouteille 1 reste en face de l'orifice d'introduction 2 et l'individu qui l'y a introduite est prié, par exemple par affichage d'un message, de la retirer et de s'en débarrasser d'une autre façon.

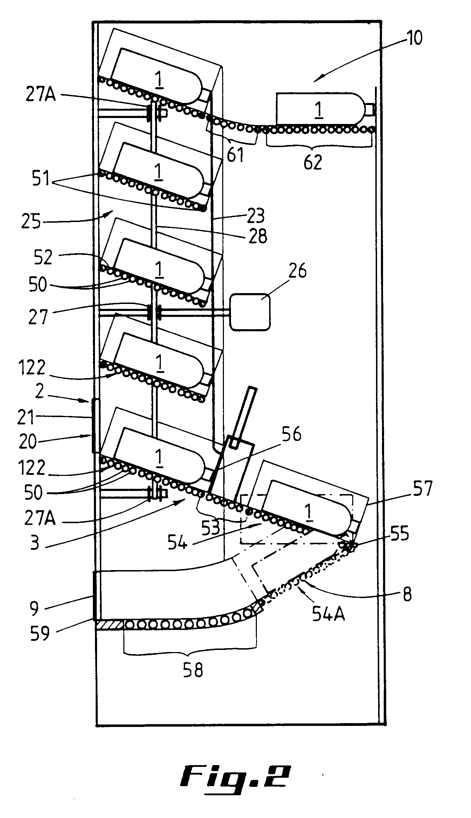

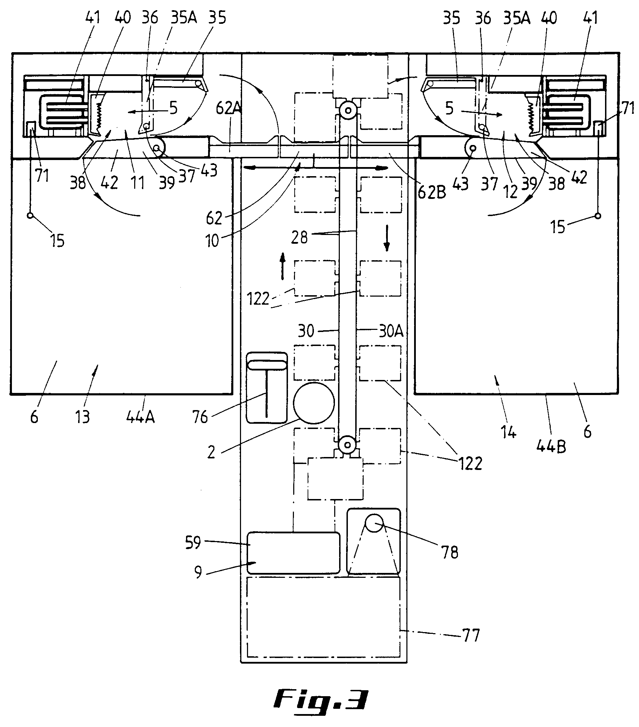

A la figure 2, si la bouteille 1 introduite, pesée en 3 et éventuellement contrôlée par système photoélectrique n'est pas admise, elle est rejetée, c'est-à-dire qu'elle est transférée successivement en 7 et en 8 pour réapparaître en 9 où l'individu qui l'a introduite est prié de la récupérer. La bouteille 1 non admise pourrait aussi être évacuée vers un stockage approprié.

A la figure 2, une bouteille 1 admise est amenée en 10, soit pour la suite du procédé décrit précédemment selon la figure 1 soit, selon un mode avantageux de l'invention, représenté à la figure 3, pour être fragmentée en fonction de sa couleur en 11 ou en 12, les fragments étant transférés alors en 13 ou respectivement en 14 pour obtenir un stockage sélectif selon la couleur.

Par stockage sélectif selon la couleur on peut comprendre que, par exemple, en 13 sont stockés uniquement des fragments de verre blanc alors qu'en 14 sont stockés des fragments de verre d'autres couleurs.

De façon préférée, le procédé peut comporter de plus en 15 (figures 1 et 3) une surveillance de niveau de stockage temporaire des fragments de verre et, lorsque le niveau a atteint une valeur déterminée, une émission d'un signal d'avertissement correspondant vers un service de collecte approprié. A la réception du signal d'avertissement, ledit service organise un transfert sélectif des fragments de verre stockés temporairement en 5, 13, 14, en vue de leur recyclage, de préférence le transfert comprenant une aspiration des fragments en 16 et, le cas échéant, un brassage de ceux-ci en 17 pour éviter qu'ils ne restent coincés dans le récipient correspondant.

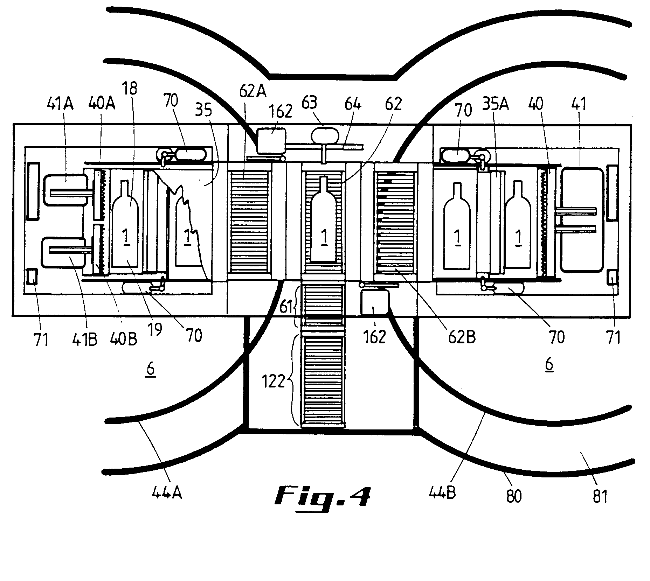

A la figure 4, on a schématisé du côté droit un cas d'exemple où la fragmentation a lieu par percussion en une fois sur toute la hauteur de la bouteille 1, tandis que du côté gauche on a schématisé un cas d'exemple où la fragmentation a lieu par percussion sur chaque fois une partie d'une même bouteille 1, séparément pour la partie 18 du dessus de la bouteille 1 et pour la partie 19 du dessous de celle-ci, avec de préférence un décalage dans le temps entre les percussions de l'une et l'autre parties 18 et 19. La percussion sur la bouteille 1 ou sur les parties 18 et 19 de celle-ci peut être répétée si nécessaire par exemple après détection de ce que des fragments obtenus sont encore trop encombrants.

Dans une forme de réalisation simple, le dispositif suivant l'invention, décrit à titre d'exemple, peut comprendre (figure 1) pour la réception d'une bouteille 1, des moyens de réception 20 pouvant comporter une porte 21 qui ferme l'orifice 2 et qui peut être ouverte à la main (par exemple par une poignée non représentée) au moment où un individu désire introduire une bouteille 1. La porte 21 peut être rappelée automatiquement en position de fermeture. Ces moyens de réception comprennent aussi une tablette 22, de préférence inclinée de façon que la bouteille 1 introduite roule contre une paroi 23 à l'opposé de l'orifice 2 afin d'être automatiquement alignée contre cette paroi 23 et maintenue dans le dispositif. Le dispositif de l'invention comporte de plus des moyens de contrôle 24, par exemple sous la forme de moyens de pesée 24 pour déterminer le poids de la bouteille 1 et sur lesquels peut par exemple poser la tablette 22 dans sa position inférieure de réception de bouteille. Comme dit ci-dessus, les moyens de pesée 24 peuvent servir à vérifier que la bouteille a un poids (paramètre de différentiation) admis qui la différencie par exemple d'objets pleins, de bouteilles en matière synthétique etc. Un autre moyen de contrôle peut être la ou les dimensions et/ou forme de l'orifice 2 qui peuvent servir à sélectionner les objets admis.

La tablette 22 peut faire également partie de moyens de transport 25 comprenant par exemple un moteur 26 avec poulie de commande 27, une poulie de renvoi 27A et une courroie sans fin 28 (de préférence dentée). Celle-ci est raccordée en 29 à la tablette 22 par son brin 30, de façon que, par un mécanisme connu en soi, elle puisse faire monter la tablette 22 mais que celle-ci, en position basse en dessous de l'orifice 2, puisse agir sur les moyens de pesée 24 comme expliqué ci-dessus. Les moyens de transport 25 sont agencés pour faire monter la tablette 22 jusqu'à une position où celle-ci porte la référence 22A.

Les moyens de transport 25 suivant l'exemple de la figure 1 peuvent encore comporter à l'endroit de la position de tablette 22A un orifice 31 (par interruption de la paroi 23) agencé pour qu'une bouteille 1 montée jusque là par la tablette 22 puisse rouler jusque sur la face supérieure, en position sensiblement horizontale, d'un plateau mobile 32. Ce dernier considéré comme faisant partie des mêmes moyens 25 est monté pour pouvoir pivoter autour d'un axe horizontal 33, agencé à son extrémité éloignée de la table 22, depuis cette position horizontale jusqu'à une position sensiblement verticale (en 32A), ce déplacement du plateau 32 (voir la flèche correspondante) faisant rouler la bouteille 1 d'une manière telle qu'elle soit déplacée sensiblement parallèlement à elle-même depuis son introduction dans le dispositif.

En atteignant la position de plateau en 32A, ce dernier a amené la bouteille 1 sur une surface d'attente 34. A ce moment, la tablette 22 peut descendre de la position 22A jusqu'à l'endroit de départ près des moyens de pesée 24.

Une plaque de butée 35 agencée sensiblement horizontalement au-dessus de la surface d'attente 34, à distance telle que la bouteille 1 puisse librement passer entre plaque 35 et surface 34, est monté pour pouvoir pivoter autour d'un axe horizontal 36 monté à son extrémité la plus éloignée du plateau mobile 32. La plaque de butée 35 peut pivoter de sa position horizontale susdite, vers le bas, jusqu'à une position sensiblement verticale (voir la flèche correspondante) en 35A. Pendant ce pivotement, par le choix des dimensions des éléments en présence, la plaque de butée 35 pousse devant elle la bouteille 1 en attente sur la surface 34. La plaque de butée 35 pendant ce déplacement peut être considérée comme faisant partie des moyens de transport 25. Lorsque la plaque de butée 35 est arrivée dans cette position verticale, le plateau mobile 32 peut retourner dans sa position horizontale de départ.

Dans sa position verticale en 35A, la plaque de butée 35 est de préférence bloquée, par exemple par une goupille pénétrant dans un trou 37 à l'extrémité opposée de la même plaque 35 par rapport à l'axe 36. Dans cette position verticale en 35A, la plaque de butée 35 peut être considérée comme faisant partie de moyens de fragmentation 38.

Les moyens de fragmentation 38 comportent de plus un fond 39 sur lequel parvient la bouteille 1 poussée par la plaque de butée 35 arrivant dans sa position 35A. A l'opposé de la plaque de butée 35 par rapport à la bouteille 1 poussée sur le fond 39, les moyens 38 comportent de plus une plaque de fragmentation 40. Celle-ci peut être déplacée, par exemple selon une direction horizontale, par un organe moteur 41 approprié, depuis une position de repos représentée à la figure 1 jusqu'à une position de fragmentation de la bouteille 1 pour casser celle-ci, pressée contre la plaque de butée 35, en fragments par une action de pression, de percussion, d'écrasement, etc..., selon le choix. De façon appropriée, les plaques de butée 35 et de fragmentation 40 peuvent être munies de saillies accentuant la capacité de fragmentation.

Le fond 39 peut comporter ou constituer une trappe 42 qui peut pivoter autour d'un axe horizontal 43 depuis la position sensiblement horizontale (représentée à la figure 1) de réception de la bouteille 1 poussée avant fragmentation jusqu'à une position pratiquement verticale (voir la flèche correspondante) en 42A permettant aux fragments obtenus de tomber des moyens de fragmentation 38. La trappe 42 peut être considérée comme faisant partie des moyens de transport 25.

Avantageusement, sous la trappe 42 est agencé un réservoir de stockage temporaire 44 par exemple cylindrique vertical dont l'axe peut passer par le milieu de la trappe 42 fermée. Ainsi les fragments peuvent arriver directement par gravité dans le réservoir 44, dans le milieu de celui-ci, pour une meilleure répartition des fragments dans ce dernier. Enfin la plaque de butée 35, la plaque de fragmentation 40 et la trappe 42 peuvent revenir dans leur position de départ ou de repos.

Etant donné les explications données ci-dessus, étape par étape, tant pour le matériel utilisé que pour les opérations effectuées, l'homme de métier peut déterminer les moyens d'entraînement , tels que moteurs, vérins ou électroaimants appropriés pour l'entraînement des éléments à déplacer, ainsi que les moyens de commande de ces moyens d'entraînement, tels que circuits à relais, automates programmables, etc..., et les séquences de fonctionnement de l'ensemble.

Un autre dispositif de l'invention, est représenté à la figure 2 pour ce qui concerne une partie de ses moyens de transports 25 et est représenté aux figures 3 et 4 pour le reste.

A la figure 2, il y a à nouveau un orifice 2 qui peut être fermé par une porte 21 à ouvrir manuellement pour introduire, le goulot ou le fond en avant, une bouteille 1 dans le dispositif, la porte 21 pouvant être rappelée automatiquement en position de fermeture. Pour recevoir la bouteille 1, il y a en face de l'orifice 2 une tablette 122 inclinée comme dans le cas de la figure 1 mais formée de préférence de plusieurs petits rouleaux 50 agencés sur un cadre (représenté uniquement par deux entretoises 51) pour former un plan 52 de réception de la bouteille 1. Plusieurs tablettes 122 semblables peuvent être agencées fixement sur une courroie dentée 28 qui s'étend vers le haut et qui est commandée pour faire monter les tablettes 122 comme expliqué ci-après.

La tablette 122 en regard de l'orifice 2 est prolongée à l'opposé de ce dernier par un tronçon de tablette fixe 53, à rouleaux 50, suivi d'un tronçon basculant 54 qui est aussi avantageusement constitué d'un cadre et de rouleaux 50 et qui peut être commandé pour pivoter autour d'un axe horizontal 55 agencé à son extrémité la plus éloignée de l'orifice 2. Il faut comprendre que les tablettes 122, tronçon fixe 53, tronçon basculant 54 et autres semblables ci-après sont équipés de guides latéraux non représentés , ajustés pour les objets 1 admis. Une bouteille 1 sur la tablette 122 précitée en regard de l'orifice 2 est bloquée sur cette tablette 122 par une porte 56 qui l'empêche de rouler plus bas sur les rouleaux 50 successifs. Si une bouteille 1 non admise est introduite dans le dispositif, une commande en provenance des moyens de contrôle précités (moyens de pesée, système de cellule photoélectrique, ...) qui détectent un objet non admis peut provoquer l'ouverture de la porte 56 pour que la bouteille 1 puisse passer, par gravité et roulement des rouleaux 50 successifs, sur le tronçon de tablette fixe 53 et sur le tronçon basculant 54 jusqu'à buter contre une paroi adéquate 57 qui est fixée à ce dernier. Une détection d'une présence d'un objet sur le tronçon basculant 54 peut provoquer un pivotement de ce dernier jusque dans une position 54A inclinée en sens inverse du sens de la tablette 122. L'objet non admis roule alors du tronçon basculant 54 sur un autre tronçon fixe 58 agencé sous l'orifice d'entrée 2 et muni d'un orifice de sortie 59 par lequel l'objet non admis est rejeté et doit être récupéré par l'individu qui a introduit celui-ci dans le dispositif.

En variante de ce qui vient d'être décrit, on peut concevoir que l'autre tronçon fixe 58 soit supprimé et que l'objet non admis tombe alors dans un récipient 60 situé sous le tronçon basculant 54.

Lorsqu'un objet non admis a passé la porte 56, celle-ci peut être aussitôt fermée pour que le dispositif puisse recevoir une nouvelle bouteille 1 à contrôler.

Dès que le tronçon basculant 54 est libéré d'un objet non admis, il peut reprendre sa position de départ dans le prolongement du tronçon fixe 53. A ce moment seulement, si cela est nécessaire, la porte 56 peut à nouveau être ouverte pour un autre rejet.

Lorsqu'une bouteille 1 n'est pas rejetée via la porte 56, le moteur 26 est commandé pour entraîner la courroie 28 afin de faire monter d'un pas la tablette à rouleaux 122 et de présenter une tablette 122 vide en regard de l'orifice 2. Plusieurs tablettes 122 sont ainsi prévues le long des deux brins 30 et 30A (figure 3) de la courroie qui circule dans un seul sens. Les bouteilles 1 sont maintenues sur les tablettes 122, pendant ce déplacement pas à pas vers le haut, parce qu'une de leurs extrémités (goulot ou fond) bute contre une paroi 23 comme ci-dessus agencée pour agir ainsi jusqu'à ce qu'une tablette 122 arrive dans le prolongement d'un tronçon fixe supérieur 61, à rouleaux 50, agencé pour permettre à un bouteille 1 de passer de cette tablette 122 (éventuellement après ouverture d'une porte non représentée qui prolonge la paroi 23 à l'endroit de ce tronçon 61 pendant le déplacement de la tablette) jusque sur un plateau mobile 62, à rouleaux 50, sur lequel la bouteille 1 repose à l'horizontale.

Le dispositif de l'invention des figures 2 à 4 peut être muni d'un système de cellule photoélectrique connu en soi, capable de reconnaître des couleurs différentes d'objets 1 en verre introduits dans le dispositif. Ce système de cellule non représenté peut être installé près de l'orifice 2 pour servir au contrôle des objets admis. Ce système pouvant différencier par exemple d'une part, du verre blanc et, d'autre part, du verre vert et/ou brun, des signaux correspondants, pour l'objet 1 déposé sur une tablette particulière, peuvent être enregistrés par les moyens de commande du dispositif simultanément à un enregistrement d'un repère de cette tablette 122 particulière, et cela pour l'une ou l'autre couleur sélectionnée. Ces signaux et repères enregistrés peuvent être exploités comme expliqué ci-après pour la commande du plateau mobile 62.

Le dispositif de l'invention, représenté aux figures 2 à 4 peut également être muni d'un système de cellule photoélectrique connu en soi d'un type semblable à ci-dessus. Ce système de cellule non représenté peut être installé par exemple de façon à détecter la couleur d'un objet 1 arrivant sur le plateau mobile 62, les signaux correspondant à la couleur et provenant dudit système peuvent être exploités comme expliqué ci-après pour la commande du plateau mobile 62.

On comprendra qu'il est possible d'utiliser uniquement les signaux correspondants précités de l'un ou de l'autre des deux systèmes de cellule exposés ci-dessus, ou d'utiliser les signaux des deux systèmes de cellule, par exemple ceux du second système exposé confirmant ceux du premier système exposé ci-dessus.

Le plateau mobile 62 de la présente forme de réalisation de l'invention peut être commandé par exemple, par moteur 63 et crémaillère 64, schématisés, pour être déplacé, en se reportant aux figures 3 et 4, vers la gauche ou vers la droite depuis la position dessinée correspondant à la réception de la bouteille 1. Le choix vers la gauche ou vers la droite dépend de la couleur détectée par l'un des ou les systèmes de cellule ci-dessus, de façon que par exemple les bouteilles 1 en verre blanc soient toutes amenées à gauche et les bouteilles 1 de verre coloré à droite. Le plateau mobile 62 est alors amené pour du verre blanc en 62A et pour du verre coloré en 62B. Le plateau en 62A ou en 62B est basculé, par un moteur 162, suivant une flèche correspondante, à la manière de ce que le plateau 32 de la figure 1 effectue comme mouvement.

A partir du plateau mobile 62 et de son basculement autour d'un axe horizontal correspondant à la position 62A ou 62B, le présent dispositif des figures 3 et 4 peut être considéré comme comprenant, pour les opérations ultérieures de transport, de fragmentation et de stockage, des éléments semblables, au moins fonctionnellement, à ceux de la figure 1.

Selon les figures 3 et 4, du verre blanc est donc fragmenté et stocké dans le réservoir 44A, séparément du verre coloré, et de ce fait sans être contaminé par ce dernier qui est stocké dans le réservoir 44B. Il apparait qu'en outre on peut aisément prévoir au moins un troisième ensemble de moyens de fragmentation 38 et de stockage 44 pour pouvoir stocker séparément du verre blanc, du brun et du vert.

Selon les représentations des figures 3 et 4, à chaque réservoir de stockage 44A, 44B sont adjoints des moyens de fragmentation distincts 38. Cependant selon l'enseignement du présent document, on peut aisément réaliser un agencement du dispositif suivant l'invention , dans lequel les moyens de fragmentation 38 seraient communs à deux ou plusieurs réservoirs 44, la sélection du réservoir en fonction de la couleur pouvant être réalisée après fragmentation, au moyen du système de cellule précité et de trappes 42 pouvant s'ouvrir sélectivement ou dans des sens différents, ou...

A la figure 4 sont schématisés des ensembles de commande 70 pour des goupilles de blocage des plaques de butée 35 dans la position 35A et il y a de préférence deux ensembles 70 par plaque 35.

A la figure 4, du côté gauche est représentée une forme de réalisation préférée des moyens de fragmentation 38, dans laquelle la plaque de fragmentation est divisée en deux plaques 40A et 40B disposées l'une à côté de l'autre et commandées par des moteurs respectifs 41A et 41B pour effectuer chacune un déplacement sensiblement parallèle à celui de l'autre plaque entre leur positions de repos et de fragmentation.

Suivant l'invention, un détecteur 71 schématisé par un boîtier et une antenne de palpage peut détecter le niveau atteint dans un réservoir 44, de façon par exemple à signaler qu'un remplissage de 80% de la capacité du réservoir 44 est atteint. Le signal du détecteur peut être transmis par radio 72 (voir figure 1), par ligne téléphonique, par affichage sur le dispositif, etc..., au service chargé de vider le réservoir 44. Comme expliqué ci-dessus, ce service peut vider le réservoir par exemple par aspiration en 16 (figure 1). Pour éviter un coincement de fragments de verre dans le réservoir, on peut prévoir dans celui-ci des moyens d'agitation ou de brassage en 17, par exemple sous forme d'une vis d'Archimède de longueur plus ou poins importante actionnée par un moteur et une transmission 117.

A la figure 3 est schématisée une poignée 76 à proximité de l'orifice 2. Cette poignée 76 peut être reliée d'une part mécaniquement à la porte 21 de l'orifice 2 et d'autre part électriquement aux moyens de commande du dispositif, pour leur mise en marche

Dans l'exemple des figures 2 à 4, les bouteilles 1 étant représentées inclinées leur goulot vers le bas, on peut prévoir au fond du dispositif un bac 77 de collecte de liquide s'écoulant éventuellement des bouteilles 1 pendant leur attente sur les tablettes 122. Un orifice d'aspiration 78 pour vider le bac 77 peut alors être prévu (figure 3).

Au cas où l'on pourrait craindre que, malgré les contrôles prévus, un objet non admis pourrait parvenir jusqu'aux moyens de fragmentation 38, on peut prévoir à cet endroit, par exemple un système photoélectrique supplémentaire qui peut servir à un nouveau contrôle et, le cas échéant actionner un poussoir (non représenté) agencé pour pousser l'objet non admis hors desdits moyens 38. On peut organiser également que, sans ce nouveau contrôle, des moyens de détection d'effort (non représentés) soient branchés sur par exemple la plaque de fragmentation ou sur son moteur, etc..., et qu'après un mouvement de ceux-ci pour la fragmentation sans l'avoir réalisée, un signal de ces moyens de détection bloque la trappe 42 et actionne le poussoir susdit pour dégager par exemple latéralement les moyens de fragmentation 38 d'un objet non admis arrivé jusque là.

A la figure 4, il est schématisé par une carrosserie 80 qui entoure le dispositif complet, de façon à insonoriser ce dernier, avec éventuellement un remplissage insonorisant des espaces 81 entre mécanismes, réservoirs 44 et carrosserie 80.

Pour les formes de réalisation décrites sur base des figures 2 à 4, l'homme de métier moyen pourra aisément choisir en fonction de cette description, les moyens d'entraînement, de commande et de détection nécessaires et leurs interactions. De plus, profitant des moyens d'affichage et/ou de transmission à distance précités, il est facile, d'une part, d'annoncer à un utilisateur du dispositif les opérations à effectuer, des fausses manoeuvres à corriger, une panne, etc.., et d'autre part, d'avertir le service adéquat d'une mauvaise utilisation, d'une panne, etc du même dispositif, celui-ci étant codé lors de messages de ce genre afin de pouvoir le distinguer parmi d'autres.

Etant donné la fragmentation précitée il est clair qu'un tel dispositif, pour une meilleure capacité de stockage que les récipients "de stockage passif" utilisés à ce jour, peut avoir des dimensions inférieures à ces derniers.

Il doit être entendu que l'invention n'est nullement limitée aux formes de réalisation décrites et que bien des modifications peuvent être apportées à ces dernières sans sortir du cadre de la présente invention comme défini par les revendications.

Par exemple on peut au même endroit d'une installation de dispositifs, éventuellement dans un même habillage, prévoir un dispositif à un réservoir pour le verre blanc et à côté un dispositif à deux réservoirs pour, d'un côté, le verre brun et, de l'autre côté, le verre vert.

## Revendications

1. Procédé de récolte sélective et de stockage temporaire d'objets en verre (1), notamment d'objets creux comme des bouteilles (1), des bocaux, etc..., comprenant:
- au moins une sélection d'un paramètre différenciant un objet en verre (1) admis dans le procédé par rapport à d'autres objets,
- un contrôle (en 3 et/ou 4) de ce qu'un objet (1) présenté pour la récolte et le stockage satisfait au paramètre de différenciation,
- si l'objet (1) satisfait audit paramètre, une fragmentation (en 5) de l'objet (1) et,
- un stockage (en 6) des fragments de verre en vue d'une collecte ultérieure,
caractérisé en ce que, pour la fragmentation, l'objet (1) est supporté et est soumis à une action de pressage et/ou de percussion et/ou décrasement appliquée sur deux côtés longitudinaux opposés de l'objet (1) selon une direction perpendiculaire à son axe longitudinal, et en ce que, si des fragments obtenus sont trop encombrants, cette action est répétée.

2. Procédé suivant la revendication 1, caractérisé en ce qu'il comprend, soit pour ladite sélection d'un paramètre soit en plus de cette étape, une sélection d'au moins une couleur à laquelle doit satisfaire l'objet en verre (1) présenté.

3. Procédé suivant l'une ou l'autre des revendications 1 et 2, caractérisé en ce que si l'objet (1) ne satisfait pas au paramètre de différenciation, éventuellement à la couleur, le procédé est arrêté, éventuellement l'objet non satisfaisant est rejeté ou évacué (en 9).

4. Procédé suivant l'une ou l'autre des revendications 2 et 3, caractérisé en ce qu'il comprend en outre, après une desdites sélections d'au moins une couleur et, après fragmentation de l'objet (1), un stockage temporaire séparé (en 13, en 14) de fragments de la ou de chaque couleur sélectionnée par rapport à des fragments d'autres couleurs.

5. Procédé suivant l'une quelconque des revendications 1 à 4, caractérisé en ce qu'il comporte en outre:
- une surveillance (en 15) de niveau de stockage temporaire des fragments de verre,
- lorsque le niveau a atteint une valeur déterminée, une émission d'un signal d'avertissement correspondant, et,
- sur réception du signal d'avertissement, un transfert sélectif des fragments de verre stockés temporairement, en vue de leur recyclage, de préférence le transfert comprenant une aspiration (en 16) des fragments et, le cas échéant, un brassage (en 17) de ceux-ci.

6. Procédé suivant l'une quelconque des revendications 1 à 5, caractérisé en ce que le paramètre de différentiation sélectionné est une plage de poids et/ou de volume d'objets en verre (1) admis, le contrôle (en 3) susdit comportant alors respectivement une pesée de l'objet et/ou un passage de celui-ci à travers un orifice (2) de dimensions déterminées.

7. Procédé suivant l'une quelconque des revendications 1 à 6, caractérisé en ce que la fragmentation (en 5) a lieu en au moins deux étapes décalées dans le temps, et en ce qu'à chaque étape est traité un endroit différent de l'objet (1).

8. Dispositif de récolte sélective et de stockage temporaire d'objets en verre (1), notamment d'objets creux comme des bouteilles (1), des bocaux, etc..., comprenant:
- des moyens de réception (20) pour recevoir successivement des objets (1) précités,
- des moyens de contrôle (24) de ce que chaque objet reçu satisfait à au moins un paramètre de différenciation prédéterminé,
- des moyens de transport (25), commandés par les moyens de contrôle (24), de chaque objet (1) qui satisfait audit au moins un paramètre de différentiation,
- des moyens de fragmentation (38) des objets (1) transportés par les moyens de transport (25), et
- au moins un réservoir (44) de stockage des fragments de verre résultant de la fragmentation (en 5)
caractérisé en ce que les moyens de fragmentation (38) comportent :
- un fond (39) pour supporter l'objet (1),
- une plaque de butée (35) et une plaque de fragmentation (40) disposées en opposition de part et d'autre de l'objet (1) à fragmenter sensiblement parallélement à son axe longitudinal,
- un organe moteur (41) agencé pour communiquer à la plaque de fragmentation (40) un mouvement de va-et-vient sensiblement perpendiculaire à l'axe longitudinal de l'objet (1) à fragmenter depuis une position de repos et de réception de l'objet (1) à fragmenter jusqu'à une position de fragmentation pour casser cet objet (1) en fragments par une action de pressage et/ou de percussion et/ou d'écrasement entre les plaques de butée (35) et de fragmentation (40),
- le fond (39) étant agencé pour laisser s'échapper les fragments de l'objet (1) des moyens de fragmentation (38),
- les moyens de fragmentation (38) étant agencés pour que l'organe moteur (41) puisse répéter le mouvement de va-et-vient de la plaque de fragmentation (40) s'il est détecté que les fragments sont trop encombrants.

9. Dispositif suivant la revendication 8, caractérisé en ce qu'il comporte, soit comme moyens de contrôle (24) susdits soit en plus de ceux-ci, des moyens de reconnaissance d'au moins une couleur de verre, les moyens de reconnaissance étant raccordés aux moyens de transport (25) pour une commande sélective de ceux-ci.

10. Dispositif suivant l'une ou l'autre des revendications 8 et 9, caractérisé en ce qu'il comporte des moyens de rejet (53 à 59) d'un objet (1) qui ne satisfait pas au paramètre précité, le cas échéant à une couleur sélectionnée, ces moyens de rejet (53 à 59) étant raccordés pour leur commande aux moyens de contrôle (24), et, le cas échéant, aux moyens de reconnaissance de couleur.

11. Dispositif suivant l'une ou l'autre des revendications 9 et 10, caractérisé en ce qu'il comporte au moins un autre réservoir de stockage (44,44A) de fragments de verre, chaque réservoir étant destiné à recevoir des fragments d'une ou des couleurs sélectionnées, et en ce que les moyens de transport (25) sont agencés pour transporter sélectivement les fragments de verre vers l'un ou l'autre réservoir de stockage (44,44A) en fonction de la reconnaissance de couleur précitée.

12. Dispositif suivant la revendication 11, caractérisé en ce qu'il comporte en outre, adjoint à chaque réservoir de stockage (44,44A) précité, des moyens de fragmentation (38) distincts, les moyens de transport (25) étant agencés pour amener sélectivement en fonction de la reconnaissance de couleur précitée les objets (1) admis vers les moyens de fragmentation (38) correspondants et pour amener depuis ces derniers les fragments jusque dans le réservoir de stockage (44,44A) correspondant.

13. Dispositif suivant l'une quelconque des revendications 8 à 12, caractérisé en ce que les moyens de contrôle (24) de ce que l'objet (1) reçu satisfait au paramètre de différentiation précité comprennent des moyens de pesée (24) pour déterminer le poids de l'objet (1) et/ou présentent un gabarit d'acceptation d'objets de dimensions et/ou formes déterminées.

14. Dispositif suivant l'une quelconque des revendications 8 à 13, caractérisé en ce que:
- les moyens de transport (25) comprennent un système élévateur pour faire monter de façon séparée l'un de l'autre les objets (1) depuis les moyens de réception (20) jusqu'aux moyens de fragmentation (38), et
- les moyens de fragmentation (38) sont situés au-dessus du réservoir de stockage (44,44A) adjoint, les moyens de transport (25) comportant pour le passage des fragments depuis les moyens de fragmentation (38) jusque dans le réservoir (44,44A) une trappe (42) permettant une chute par gravité des fragments dans ce dernier.

15. Dispositif suivant l'une quelconque des revendications 8 à 14, caractérisé en ce que les moyens de fragmentation (38) comprennent chaque fois:
- d'une part, la plaque de butée (35) qui est agencée du côté de l'arrivée des objets (1) à fragmenter, en provenance des moyens de transport (25), et qui peut être commandée pour être déplacée entre deux positions extrêmes, une position retirée du passage des objets arrivant des moyens de transport (25) et une position bloquée dans le passage précité, de façon à présenter à un objet (1) dans les moyens de fragmentation (38) un appui fixe pendant une opération de fragmentation, et
- d'autre part, au moins une plaque de fragmentation (40) qui est agencée à l'opposé de la plaque de butée (35) par rapport à un objet (1) admis dans les moyens de fragmentation (38) et qui peut être commandée pour être déplacée entre deux positions extrêmes, une position de repos à une distance telle de la plaque de butée (35) en position bloquée qu'un objet (1) admis puisse être logé entre ces plaques (35 et 40), et une position de fragmentation rapprochée de la plaque de butée (35) et dans laquelle un objet (1) admis est fragmenté entre les deux plaques (35 et 40), de préférence par percussion de la plaque de fragmentation (40) contre l'objet (1) appuyé contre la plaque de butée (35).

16. Dispositif suivant la revendication 15, caractérisé en ce que deux plaques de fragmentation (40A, 40B)sont prévues l'une à côté de l'autre, chacune étant agencée et pouvant être commandée séparément pour effectuer un déplacement sensiblement parallèle à celui de l'autre plaque entre une position de repos précitée et un position de fragmentation susdite.

17. Dispositif suivant l'une quelconque des revendications 8 à 16, caractérisé en ce qu'il comporte un dispositif de détection (71) de niveau de fragments dans le ou dans chacun des réservoirs de stockage (44, 44A) et en ce que ce dispositif de détection (71) est agencé pour signaler qu'un niveau prédéterminé est atteint par les fragments stockés dans le réservoir concerné.

18. Dispositif suivant l'une quelconque des revendications 8 à 17, caractérisé en ce qu'il comporte dans le ou chacun des réservoirs de stockage (44, 44A) des moyens (17) d'agitation ou de brassage de fragments de verre, agencés pour éviter que ces derniers y restent coincés au cours d'un vidage du réservoir (44, 44A) notamment par aspiration.

## Claims

1. Process for selectively collecting and temporarily storing glass objects (1), in particular hollow objects such as bottles (1) jars etc., comprising :
- at least one selection of a parameter differentiating a glass object introduced into the process with respect to the other objects,
- verification (in 3 and/or 4) that an object (1) presented for collection and storage complies with the differentiating parameter,
- if the object (1) complied with the said parameter, fragmentation (in 5) of the object (1) and,
- storage (in 6) of the glass fragments with a view to subsequent collection,
characterized in that, for the fragmentation, the object (1) is supported and is subjected to a pressing and/or percussive and/or crushing action applied on two opposite longitudinal sides of the object (1) along a direction perpendicular to its longitudinal axis, and in that this action is repeated if the fragments obtained are too bulky.

2. Process according to claim 1, characterized in that it comprises, either for the said selection of a parameter or in addition to this step, a selection of at least one colour with which the glass object (1) presented must comply.

3. Process according to one or other of claims 1 and 2, characterized in that if the object (1) does not comply with the differentiating parameter, possibly with the colour, the process is stopped, the non-compliant object being possibly rejected or removed (in 9).

4. Process according to one or other of claims 2 and 3, characterized in that it additionally includes, after one of the said selections of at least one colour and, after fragmentation of the object (1), a separate temporary storage (in 13, in 14) of fragments of the colour selected or of each colour selected with respect to the fragments of other colours.

5. Process according to any of claims 1 to 4 characterized in that it additionally includes :
- monitoring (in 15) of the level of the temporary storage of glass fragments,
- when the level has reached a set value, emission of a corresponding warning signal and,
- on reception of the warning signal, selective transfer of the temporarily stored glass fragments with a view to recycling them, the transfer preferably including suction (in 16) of the fragments and, if required, stirring of these (in 17).

6. Process according to any of claims 1 to 5, characterized in that the differentiating parameter selected is a range of weights and/or volumes for the glass objects accepted (1), the aforesaid verification (in 3) then comprising respectively weighing the object and/or passing it through an orifice (2) with set dimensions.

7. Process according to any of claims 1 to 6, characterized in that the fragmentation (in 5) occurs in at least two steps offset in time and a different position on the object is treated in each step.

8. Device for the selective collection and temporary storage of glass objects (1), in particular hollow objects such as bottles (1), jars, etc. comprising :
- means of reception (20) for successively receiving the aforementioned objects (1)
- means for verifying (24) that each object received complies with at least one predetermined differentiating parameter,
- means of transporting (25) controlled by the means of verification (24), each object (1) which complies with at least one differentiating parameter.
- means of fragmenting (38) the objects (1) transported by the means of transPort (25), and at least one reservoir (44) for storing the glass fragments resulting from the fragmentation (in 5),
characterized in that the means of fragmentation (38) comprise :
- a base (39) for supporting the object (1)
- a stop plate (35) and a fragmentation plate (40) arranged in opposition either side of the object (1) to be fragmented, substantially parallel to its longitudinal axis,
- a motive unit (41) arranged so as to communicate to the fragmentation plate (40) a to-and-fro movement substantially perpendicular to the longitudinal axis of the object (1) to be fragmented, from a position of rest for receiving the object (1) to be fragmented to a fragmentation position for breaking this object (1) into fragments by a pressing and/or percussive and/or crushing action between the stop plates (35) and the fragmentation plates (40),
- the base (39) being arranged so as to allow the fragments of the object (1) to escape from the means of fragmentation (38),
- the means of fragmentation (38) being arranged so that the motive unit (41) can repeat the to-and-fro movement of the fragmentation place (40) if it is detected that the fragments are too bulky.

9. Device according to claim 8, characterized in that it includes, either as the aforesaid means of verification (24) or in addition to these, means of recognizing at least one glass colour, the means of recognition being connected to the means of transport (25) for selectively controlling these.

10. Device according to one or other of claims 8 and 9, characterized in that it includes means (53 to 59) for rejecting an object (1) which does not comply with the aforementioned parameter, as the case may be a selected colour, these means of rejection (53 to 59) being connected, for the purpose of controlling them, to the means of verification (24) and, as the case may be, to the means for recognising colour.

11. Device according to one or other of claims 9 and 10, characterized in that it includes at least another storage reservoir (44, 44A) for glass fragments, each reservoir being designed to receive the fragments of one or more selected colours, and in that the means of transport (25) are arranged so as to transport the glass fragments selectively to one or other storage reservoir (44, 44A) according to the aforementioned colour recognition.

12. Device according to claim 11, characterized in that it additionally includes, associated with each aforementioned storage reservoir (44, 44A), distinct means of fragmentation (38), the means of transport (25) being arranged so as to bring the accepted objects (1) selectively according to the aforementioned colour recognition to the corresponding means of fragmentation (38) and to bring the fragments from the latter to the corresponding storage reservoir (44, 44A).

13. Device according to any of claims 8 to 12. characterized in that the means of verifying (24) that the object (1) received complies with the aforementioned differentiation parameter including means of weighing (24) to determine the weight of the object (1) and/or have an acceptance range for objects of set dimensions and/or shapes.

14. Device according to any of claims 8 to 13, characterized in that :
- the means of transport (25) comprise a lifting system for raising the objects (1) separately from each other from the means of reception (20) to the means of fragmentation (38), and
- the means of fragmentation (38) are situated above the associated storage reservoir (44, 44A), the means of transport (25) including for the passage of fragments from the means of fragmentation (38) into the reservoir (44, 44A), a trapped door (42) permitting the fragments to fall by gravity into the latter.

15. Device according to any of claims 8 to 14, characterized in that the means of fragmentation (38) comprise each time :
- on the one hand, the stop plate (35) which is arranged beside the arrival point of the objects (1) to be fragmented, coming from the means of transport (25), and which may be controlled so as to be moved between two extreme positions, a position withdrawn from the passage of the objects arriving by the means of transport (25) and a position locked in the aforementioned passage, so as to present a fixed support to an object (1) in the means of fragmentation (38) during a fragmentation operation and
- on the other hand, at least one fragmentation plate (40) which is arranged opposite the stop plate (35) with respect to an object (1) introduced into the means of fragmentation (38) and which may be controlled so as to be moved between two extreme positions: a rest position at such a distance from the stop plate (35) in the locked position that an introduced object can be lodged between two plates (35 and 40); and a close fragmentation position of the stop plate (35) in which an introduced object (1) is fragmented between the two plates (35 and 40), preferably by percussion by the fragmentation plate (40) against the object (1) supported against the stop plate (35).

16. Device according to claim 15, characterized in that two fragmentation plates (40A, 40B) are provided beside each other, each being arranged and able to be controlled separately so as to perform a substantially parallel movement to that of the other plate between an aforementioned rest position and an aforementioned fragmentation position.

17. Device according to any of claims 8 to 16, characterized in that it includes a device (71) for detecting the level of fragments in the storage reservoir or in each of the storage reservoirs (44, 44A) and in that this detection device (71) is arranged so as to signal that a predetermined level is reached by the fragments stored in the reservoir concerned.

18. Device according to any of claims 8 to 17, characterized in that it includes in the storage reservoir or in each of the storage reservoirs (44, 44A) means (17) for agitating or stirring the glass fragments, arranged so as to prevent the latter remaining wedged during the emptying of the reservoir (44, 44A) in particular by suction.

## Patentansprüche

1. Verfahren zur selektiven Gewinnung und zeitweisen Aufbebewahrung von Objekten aus Glas (1), insbesondere von hohlen Objekten, wie Flaschen (1), Gläsern, usw. mit
- wenigstens einer Selektion eines Parameters, welcher ein Objekt aus Glas (1), das in dem Verfahren zugelassen worden ist, im Verhältnis zu anderen Objekten unterscheidet,
- einer Kontrolle (in 3 und/oder 4), ob ein Objekt (1), das für die Gewinnung und Aufbewahrung präsentiert wird, dem Unterscheidungsparameter genügt,
- einer Zerkleinerung (in 5) des Objektes (1), wenn das Objekt (1) dem besagten Parameter genügt und
- einer Aufbewahrung (in 6) der Glasteile im Hinblick auf eine spätere Sammlung,
dadurch gekennzeichnet,
daß für die Zerkleinerung das Objekt (1) getragen wird und einer Druckbeaufschlagung und/oder einer Stoßbeaufschlagung und/oder einer Zerdrückbeaufschlagung unterzogen wird, welche auf zwei gegenüberliegenden Längsseiten des Objektes (1) entlang einer zu seiner Längsachse rechtwinkligen Richtung angewendet wird, und daß, falls die erhaltenen Teile zu groß sind, diese Beaufschlagung wiederholt wird.

2. Verfahren nach Anspruch 1,
dadurch gekennzeichnet,
daß es entweder für die Selektion eines Parameters oder zusätzlich zu diesem Schritt eine Selektion wenigstens einer Farbe aufweist, welcher das präsentierte Objekt aus Glas (1) genügen soll.

3. Verfahren nach dem einen oder dem anderen der Ansprüche 1 und 2,
dadurch gekennzeichnet,
daß, wenn das Objekt (1) dem Unterscheidungsparameter, evtl. der Farbe, nicht genügt, das Verfahren angehalten wird und evtl. das nicht genügende Objekt zurückgezogen oder (in 9) evakuiert wird.

4. Verfahren nach dem einen oder anderen der Ansprüche 2 und 3,
dadurch gekennzeichnet,
daß es außerdem nach einer der Selektionen wenigstens einer Farbe und nach der Zerkleinerung des Objektes (1) eine zeitweise getrennte Aufbewahrung (in 13, in 14) der Teile der oder jeder ausgewählten Farbe im Verhältnis zu den Teilen anderer Farben aufweist.

5. Verfahren nach irgendeinem der Ansprüche 1 bis 4,
dadurch gekennzeichnet,
daß es außerdem aufweist:
- eine Überwachung (in 15) des Niveaus der zeitweisen Aufbewahrung der Glasteile,
- eine Aussendung eines entsprechenden Warnsignals, wenn das Niveau einen vorbestimmten Wert erreicht hat, und
- bei Empfang des Warnsignals einen selektiven Transfer der zeitweise aufbewahrten Glasteile im Hinblick auf ihre Recyclung, wobei vorzugsweise der Transfer eine Ansaugung (in 16) der Teile und ggf. ein Umrühren (in 17) derselben aufweist.

6. Verfahren nach irgendeinem der Ansprüche 1 bis 5,
dadurch gekennzeichnet,
daß der ausgewählte Unterscheidungsparameter ein Gewichtsbereich und/oder einen Volumenbereich der zugelassenen Glasobjekte (1) ist, wobei die Kontrolle (in 3) dann jeweils eine Wägung des Objektes und/oder einen Durchtritt desselben durch eine Öffnung (2) mit vorbestimmten Abmessungen aufweist.

7. Verfahren nach irgendeinem der Ansprüche 1 bis 6,
dadurch gekennzeichnet,
daß die Zerkleinerung (in 5) in wenigstens zwei zeitlich getrennten Stufen stattfindet und daß in jeder Stufe ein anderer Bereich des Objektes (1) behandelt wird.

8. Vorrichtung zur selektiven Gewinnung und zeitweisen Aufbewahrung von Objekten aus Glas (1), insbesondere hohlen Objekten, wie Flaschen (1), Gläsern, usw. mit:
- Aufnahmemitteln (20) zur sukzessiven Aufnahme der Objekte (1),
- Mitteln zur Kontrolle (24), ob jedes empfangene Objekt wenigstens einem vorbestimmten Unterscheidungsparameter genügt,
- Mitteln zum Transport (25), welche von den Kontrollmitteln (24) gesteuert werden, für jedes Objekt (1), das wenigstens einem Unterscheidungsparameter genügt,
- Mitteln zur Zerkleinerung (38) der Objekte (1), die von den Transportmitteln (25) transportiert worden sind,
und
- wenigstens einem Reservoir (44) zur Aufbewahrung der Glasteile, die aus der Zerkleinerung (in 5) resultieren,
dadurch gekennzeichnet,
daß die Mittel zur Zerkleinerung (38) aufweisen:
- einen Boden (39) zum Tragen des Objektes (1),
- eine Anschlagplatte (35) und eine Zerkleinerungsplatte (40), die gegenüberliegend beidseitig des zu zerkleinernden Objektes (1) etwa parallel zu seiner Längsachse angeordnet sind,
- ein Motororgan (41), das betätigt wird, um der Zerkleinerungsplatte (40) eine Bewegung zu übertragen hin und weg etwa rechtwinklig zur Längsachse des zu zerkleinernden Objektes (1), dann eine Position der Ruhe und zur Aufnahme eines zu zerkleinernden Objektes (1) bis zu einer Zerkleinerungsposition, um das Objekt (1) in Teile zu zerkleinern durch eine Druckbetätigung und/oder Stoßbetätigung und/oder Zerdrückbetätigung zwischen der Anschlagplatte (35) und der Zerkleinerungsplatte (40),
- wobei der Boden (39) derart betätigt wird, um die Teile des Objektes (1) aus den Zerkleinerungsmitteln (38) herauskommen zu lassen,
- wobei die Zerkleinerungsmittel (38) betätigt werden, damit das Motororgan (41) die Hin- und Wegbewegung der Zerkleinerungsplatte (40) wiederholen kann, wenn entdeckt wird, daß die Teile zu groß sind.

9. Vorrichtung nach Anspruch 8,
dadurch gekennzeichnet,
daß diese entweder als die Kontrollmittel (24) oder zusätzlich zu diesen Mittel zur Erkennung wenigstens einer Glasfarbe aufweist, wobei die Mittel zur Erkennung mit den Transportmitteln (25) für eine selektive Steuerung derselben verbunden sind.

10. Vorrichtung nach dem einen oder anderen der Ansprüche 8 und 9,
dadurch gekennzeichnet,
daß diese Mittel zum Zurückhalten (53 bis 59) eines Objektes (1) aufweist, welches dem vorzitierten Parameter nicht entspricht, ggf. einer vorbestimmten Farbe, wobei die Zurückhaltemittel (53 bis 59) für ihre Steuerung mit dem Kontrollmittel (24) verbunden sind und ggf. mit den Farberkennungsmitteln.

11. Vorrichtung nach dem einen oder anderen der Ansprüche 9 und 10,
dadurch gekennzeichnet,
daß diese wenigstens ein anderes Aufbewahrungsreservoir (44,44A) für Glasteile aufweist, wobei jedes Reservoir bestimmt ist, um Teile der einen oder der anderen ausgewählten Farbe zu empfangen, und daß die Transportmittel (25) betätigt werden, um selektiv die Teile des Glases zu dem einen oder dem anderen Aufbewahrungsreservoir (44,44A) in Funktion der Erkennung der vorzitierten Farbe zu transportieren.

12. Vorrichtung nach Anspruch 11,
dadurch gekennzeichnet,
daß sie außerdem hinzugefügt zu jedem Aufbewahrungsreservoir (44,44A) verschiedene Zerkleinerungsmittel (38) aufweist, wobei die Transportmittel (25) betätigt werden, um selektiv in Funktion der Erkennung der vorzitierten Farben die zugelassenen Objekte (1) den entsprechenden Zerkleinerungsmitteln (38) zuzuführen und von diesen letzteren die Teile bis in das entsprechende Aufbewahrungsreservoir (44,44A) zu führen.

13. Vorrichtung nach irgendeinem der Ansprüche 8 bis 12,
dadurch gekennzeichnet,
daß die Mittel zur Kontrolle (24), ob das empfangene Objekt (1) einem Unterscheidungsparameter genügt, Wägemittel (24) zur Bestimmung des Gewichtes des Objektes (1) aufweist und/oder ein Empfangsmodell für Objekte von vorbestimmten Abmessungen und Formen enthält.

14. Vorrichtunng nach irgendeinem der Ansprüche 8 bis 13,
dadurch gekennzeichnet,
- daß die Transportmittel (25) ein Aufzugssystem aufweisen, um das eine oder das andere der Objekte (1) getrennt von den Empfangsmitteln (20) bis zu den Zerkleinerungsmitteln (38) anheben zu lassen, und
- daß die Zerkleinerungsmittel (38) oberhalb des zugeordneten Aufbewahrungsreservoirs (44,44A) angeordnet sind, wobei die Transportmittel (25) für den Durchtritt der Teile von den Zerkleinerungsmitteln (38) bis in das Reservoir (44,44A) eine Klappe (42) aufweisen, die ein Herunterfallen durch Schwerkraft der Teile in das letztere erlauben.

15. Vorrichtung nach irgendeinem der Ansprüche 8 bis 14,
dadurch gekennzeichnet,
daß die Zerkleinerungsmittel jedes Mal aufweisen:
- einerseits die Anschlagplatte (35), die betätigt wird bei Ankunft der zu zerkleinernden Objekte (1), die durch die Transportmittel (25) herangebracht werden, und die gesteuert werden kann, um zwischen zwei Extrempositionen verschoben zu werden, nämlich einer zurückgezogenen Position für den Durchtritt der von den Transportmitteln (25) ankommenden Objekte und einer Blockade-Position in den vorzitierten Durchtritt, derart, um einem Objekt (1) in den Zerkleinerungsmitteln (38) eine feste Stütze während der Zerkleinerungsoperation zu bieten, und
- andererseits wenigstens einer Zerkleinerungsplatte (40), die betätigt wird entgegengesetzt zu der Anschlagplatte (35) im Verhältnis zu einem in die Zerkleinerungsmittel (38) zugelassenen Objekt (1) und die gesteuert werden kann, um zwischen zwei Extrempositionen verschoben zu werden, nämlich einer Ruheposition mit einem solchen Abstand von der Anschlagplatte (35) in bockierter Position, daß ein zugelassenes Objekt (1) zwischen den beiden Platten (35 und 40) aufgenommen werden kann, und einer an die Anschlagplatte (35) angenäherten Zerkleinerungsposition, in welcher ein zugelassenes Objekt (1) zwischen den beiden Platten (35 und 40) zerkleinert wird, vorzugsweise durch Stoßen der Zerkleinerungsplatte (40) gegen das Objekt (1), das gegen die Anschlagplatte (35) abgestützt ist.

16. Vorrichtung nach Anspruch 15,
dadurch gekennzeichnet,
daß zwei Zerkleinerungsplatten (40A,40B) nebeneinander angeordnet sind, wobei jede betätigt wird und getrennt gesteuert werden kann, um eine Verschiebung etwa parallel zu derjenigen der anderen Platte zwischen der Ruheposition und der Zerkleinerungsposition zu bewirken.

17. Vorrichtung nach irgendeinem der Ansprüche 8 bis 16,
dadurch gekennzeichnet,
daß diese eine Vorrichtung zur Detektion (71) des Niveaus der Teile in dem oder jedem Aufbewahrungsreservoir (44,44A) aufweist und daß die Detektionsvorrichtung (71) betätigt wird, um anzuzeigen, daß ein vorbestimmtes Niveau für die in dem betreffenden Reservoir aufbewahrten Teile erreicht ist.

18. Vorrichtung nach irgendeinem der Ansprüche 8 bis 17,
dadurch gekennzeichnet,
daß diese in dem oder jedem Aufbewahrungsreservoir (44,44A) Mittel zur Betätigung oder Umrührung der Glasteile aufweist, die betätigt werden, um zu vermeiden, daß diese letzteren aneinander haftend bleiben im Laufe einer Evakuierung des Reservoirs (44,44A), insbesondere durch Absaugung.
